# EUROPEAN PATENT SPECIFICATION

(11) **EP 3 721 021 B1**
(45) Date of publication and mention of the grant of the patent: **25.01.2023**
(21) Application number: 18830308.5
(22) Date of filing: 06.12.2018
(51) Int. Cl.: E02F 9/08, B60K 5/12, B62D 51/00, E02F 9/20

(54) **EARTH MOVING MACHINE WITH A VERTICALLY MOVABLE ENGINE COMPARTMENT**
ERDBEWEGUNGSMASCHINE MIT EINEM VERTIKAL BEWEGLICHEN MOTORRAUM
MACHINE DE TERRASSEMENT DOTÉE D'UN COMPARTIMENT MOTEUR MOBILE VERTICALEMENT

(30) Priority: 06.12.2017 IT 201700141257
(43) Date of publication of application: 14.10.2020
(73) Proprietor: MDB SRL, 66034 Lanciano (CH) (IT)
(72) Inventor: DI BIASE, Mario, 66034 Lanciano (CH) (IT)
(74) Representative: Cataldi, Giulia
(86) International application number: PCT/IB2018/059720
(87) International publication number: WO 2019/111205

(56) References cited:
- FR-A1- 2 260 474
- FR-A1- 2 421 749
- FR-A1- 2 759 998
- GB-A- 2 206 853
- US-A- 4 679 489

## Description

### CROSS-REFERENCE TO RELATED APPLICATIONS

This patent application claims priority from Italian patent application no. 102017000141257 filed on 6/12/2017, the entire disclosure of which is incorporated herein by reference.

### TECHNICAL FIELD

The present invention relates to a radio-controlled earth-moving machine. This machine can be used in particular for making tunnels.

### BACKGROUND ART

The earth-moving machines used in tunnels comprise a frame, which supports two side tracks and which supports in its rear part a compartment housing an engine to move the tracks. The machine is further equipped with a tool to excavate the tunnel and/or to transport the earth produced by the excavation. Everything is designed to minimize the height of the earth-moving machine. The engine compartment is nothing more than a prismatic box housing the engine.

The earth-moving machines currently on the market have a serious drawback.

Particularly at the exit of the tunnel, the machine must travel along a road that can have some bumps or even a minimum slope. Consequently, since the bottom wall of the engine compartment is quite close to the road surface, the engine compartment comes into contact with this surface and if this contact is violent, it can even cause considerable (sometimes irreparable) damage, not only to the engine compartment but also to the part of the frame that supports it. An earth moving machine with a vertically movable engine compartment is for example disclosed in document FR 2 421 749 A1.

### DISCLOSURE OF INVENTION

The object of the present invention is to provide an earth-moving machine that is free of the aforementioned drawback. The object of the present invention is a preferably radio-controlled earth-moving machine and of the type comprising:
a frame provided with two side tracks;
an engine compartment supported by the rear part of said frame;
means to control the vertical movement of said engine compartment to change the distance between this latter and the road surface; characterized in that said means to control the vertical movement of said engine compartment comprise a control device and a sensor, which is able to detect the distance between the bottom wall of said engine compartment and the road surface so as to send a relative signal to said control device in order to control the vertical movement of said engine compartment.

### BRIEF DESCRIPTION OF THE DRAWINGS

For a better understanding of the invention, a preferred embodiment is described purely by way of example, in which:
Figure 1 is a side view of an earth-moving machine manufactured according to the dictates of the present invention;
Figure 2 is a front view of the machine of Figure 1;
Figures 3 and 4 are respectively side and front views of the earth-moving machine with its engine compartment in a different position with respect to the position shown in Figures 1 and 2;
Figure 5 is a partial plan view and on an enlarged scale of a part of the earth-moving machine of Figure 1; and
Figure 6 is a view on an enlarged scale of an area of the earth-moving machine shown in Figure 5.

### BEST MODE FOR CARRYING OUT THE INVENTION

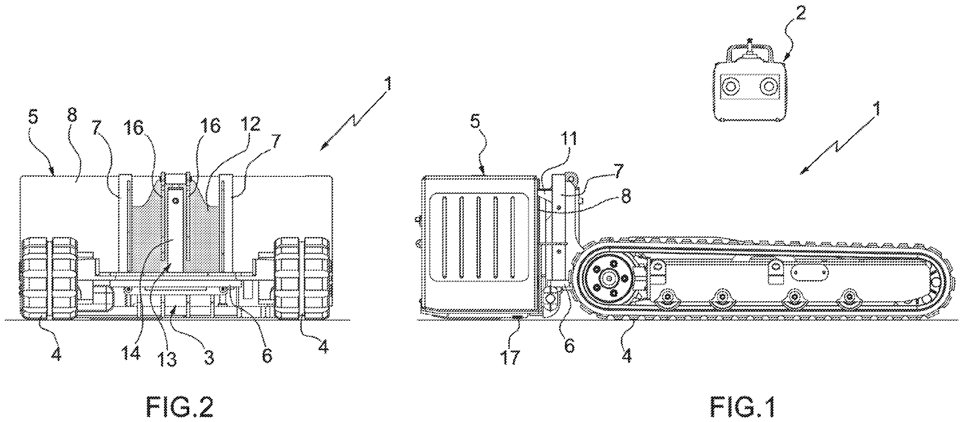

Figures 1 and 2 indicate as a whole an earth-moving machine, radio-controlled by means of a known type of control device 2. The machine 1 is particularly suitable to excavate tunnels and has therefore a reduced height. The machine 1 comprises a frame 3 of a known type provided with two side tracks 4 and with a tool (not shown since it is of known type) suitable to excavate the tunnel and/or to transport the earth produced by the excavation. Moreover, the frame 3 supports in its rear part a compartment 5, commonly called the engine compartment because it houses an engine, not shown, to control the movement of the tracks 4, the engine compartment 5 being a prismatic box supported by the frame 3.

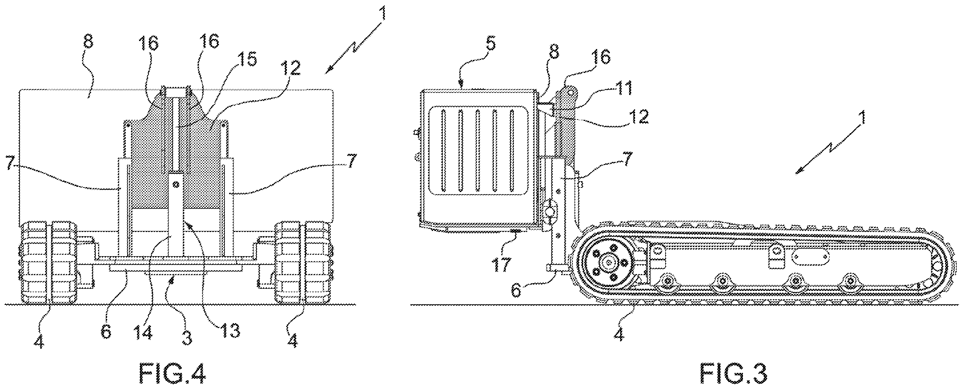

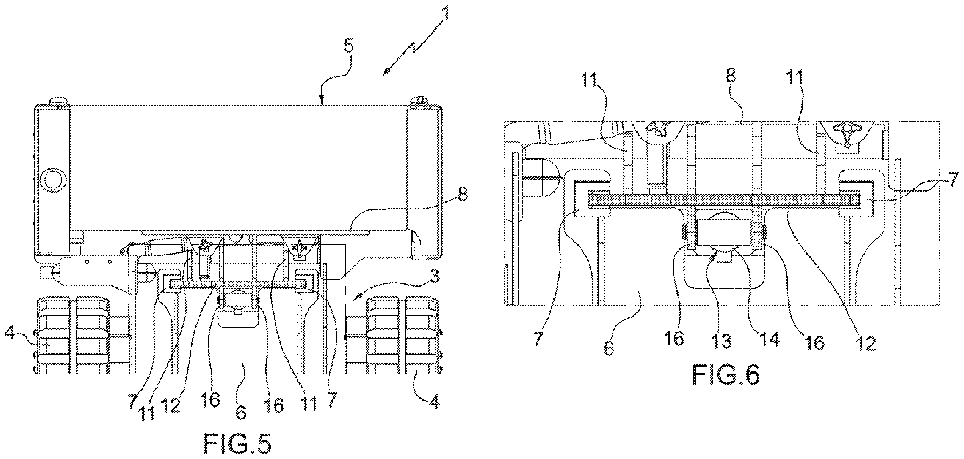

As shown in Figures 2 to 6, in its rear area the frame 3 is provided with a plate 6 arranged on a horizontal plane and supporting two vertical guides 7 parallel to each other. The engine compartment 5 has a front wall 8 that, by means of brackets 11, supports a plate 12 arranged on a vertical plane orthogonal to the horizontal plane on which the plate 6 is arranged, the vertical side edges of the plate 12 being slidable along the guides 7. A (pneumatic, hydraulic or oleodynamic) fluid dynamic actuator 13 is installed between the plates 6 and 12. Its longitudinal axis is vertical, parallel to the plate 12 and orthogonal to the plate 6. As shown in Figures 2, 4, the actuator 13 has its own stationary cylinder 14 carried by the plate 6 and its own rod 15 having a top free end fixed to a pair of brackets 16, which are in turn fixed to the plate 12.

In use, when the machine 1 has to drive along a road with bumps or slopes, to avoid any contact between the bottom wall of the engine compartment 5 and the road surface, the device 2 controls the actuator 13 and switches it from the configuration shown in the Figures 1 and 2 into the configuration shown in Figures 3 and 4. Basically, the upward movement of the rod 15 is controlled so as to lift the engine compartment 5 and bring it to a certain distance from the road surface so that the bottom wall of the engine compartment does not come into contact with the road surface. The device 2 can obviously control the actuator 13 to bring the engine compartment 5 back into the configuration shown in Figures 1 and 2. Basically, the object of the present invention consists in providing means that can control the vertical movement of the engine compartment 5 to change the distance between this latter and the road surface. It is clear that the movement of the rod 15 can be controlled even for a distance shorter than the maximum distance, depending on the slope. Finally, as shown in Figures 1 and 3, it is possible to provide the machine 1 with a sensor 17 which, for example, can be mounted on the bottom wall of the engine compartment 5 and which is able to detect the distance between the bottom wall of the engine compartment 5 and the road surface so as to send a relative signal to the device 2. When the detected distance between the bottom wall of the engine compartment 5 and the road surface is smaller than a predetermined value, the device 2 sends an acoustic or visual alarm signal and possibly blocks the movement of the machine 1, or the device 2 automatically orders the lifting of the engine compartment 5.

From the above description, the advantages achieved by means of the present invention are clear.

In particular, the machine 1 avoids either manually or automatically any contact between the engine compartment 5 and the road surface, especially when the machine 1 travels along a road with bumps or slopes. Therefore, this avoids any damage to the engine compartment 5 and to the frame 3. Basically, it is possible to control the lifting of the engine compartment 5 from its usual working position (the machine 1 must work in a tunnel which normally has a reduced height) to a safety position that prevents any contact between the engine compartment 5 and the road surface, and vice versa. Moreover, it is possible to change the lifting height of the engine compartment 5. Finally, it is possible to provide the machine 1 with means (sensor 17) that signal the distance between the bottom wall of the engine compartment 5 and the road surface to warn the operators about any possibility of impact between the engine compartment 5 and the road surface and/or to automatically control the lifting of the engine compartment 5.

It is clear that the means for lifting the engine compartment may be different from those shown and described.

## Claims

1. A earth-moving machine, preferably radio-controlled, comprising:
a frame (3), which is provided with two side tracks (4) ;
an engine compartment (5), which is supported by the rear part of said frame (3);
means (2, 13) to control the vertical movement of said engine compartment (5) so as to change the distance between this latter and the road surface;
**characterized in that** said means (2, 13) to control the vertical movement of said engine compartment (5) comprise a control device (2) and a sensor (17), which is able to detect the distance between the bottom wall of said engine compartment (5) and the road surface so as to send a relative signal to said control device (2) in order to control the vertical movement of said engine compartment (5) .

2. A machine according to claim 1, **characterized in that** said means (2, 13) to control the vertical movement of said engine compartment (5) comprise a fluid dynamic actuator (13) having a stationary cylinder (14), which is carried by a first plate (6) fixed to said frame (3), and a rod (15) having a free end fixed to a second plate (12), which is carried by said engine compartment (5).

3. A machine according to claim 1, **characterized in that** said means (2, 13) to control the vertical movement of said engine compartment (5) comprise a fluid dynamic actuator (13) having a rod (15), which has a free end fixed to a first plate (6) carried by said frame (3), and a stationary cylinder (14) fixed to a second plate (12), which is carried by said engine compartment (5).

4. A machine according to claim 2, **characterized in that** said frame (3), in its rear area, is provided with said first plate (6) provided on a horizontal plate and supporting two vertical guides (7), which are parallel to one another, and **in that** said engine compartment (5) has a front wall (8), which, by means of at least a first bracket (11), supports said second plate (12) provided on a vertical plane that is orthogonal to the horizontal plane on which said first plate (6) is provided; the vertical side edges of said second plate (12) being able to slide along said guides (7).

5. A machine according to claim 4, **characterized in that** between said plates (6 and 12) it is installed said fluid dynamic actuator (13) whose longitudinal axis is vertical, parallel to said second plate (12) and orthogonal to said first plate (6); said actuator (13) having said stationary cylinder (14), which is carried by said first plate (6), and said rod (15), which has a free upper end fixed to at least a second bracket (16) that is fixed to said second plate (12).

6. A machine according to any one of the preceding claims, **characterized in that** said means (2, 13) to control the vertical movement of said engine compartment (5) comprise a control device (2), which can be operated by an operator.

## Patentansprüche

1. Erdbewegungsmaschine, vorzugsweise funkgesteuert, umfassend:
einen Rahmen (3), der mit zwei Seitenketten (4) versehen ist;
einen Motorraum (5), der von dem hinteren Teil des Rahmens (3) getragen wird;
Mittel (2, 13) zur Steuerung der vertikalen Bewegung des Motorraums (5) derart, dass der Abstand zwischen diesem und der Fahrbahnoberfläche verändert wird;
**dadurch gekennzeichnet, dass** die Mittel (2, 13) zur Steuerung der vertikalen Bewegung des Motorraums (5) eine Steuervorrichtung (2) und einen Sensor (17) umfassen, der in der Lage ist, den Abstand zwischen der Bodenwand des Motorraums (5) und der Fahrbahnoberfläche so zu erfassen, dass ein relatives Signal an die Steuervorrichtung (2) gesendet wird, um die vertikale Bewegung des Motorraums (5) zu steuern.

2. Maschine nach Anspruch 1, **dadurch gekennzeichnet, dass** die Mittel (2, 13) zur Steuerung der vertikalen Bewegung des Motorraums (5) einen fluiddynamischen Aktuator (13) mit einem stationären Zylinder (14), der von einer am Rahmen (3) befestigten ersten Platte (6) getragen wird, und eine Stange (15) umfasst, deren freies Ende an einer zweiten Platte (12) befestigt ist, die von dem Motorraum (5) getragen wird.

3. Maschine nach Anspruch 1, **dadurch gekennzeichnet, dass** die Mittel (2, 13) zur Steuerung der vertikalen Bewegung des Motorraums (5) einen fluiddynamischen Aktuator (13) mit einer Stange (15), deren freies Ende an einer vom Rahmen (3) getragenen ersten Platte (6) befestigt ist, und einen stationären Zylinder (14) umfassen, der an einer zweiten Platte (12) befestigt ist, die vom Motorraum (5) getragen wird.

4. Maschine nach Anspruch 2, **dadurch gekennzeichnet, dass** der Rahmen (3) in seinem hinteren Bereich mit der ersten Platte (6) versehen ist, die auf einer horizontalen Platte vorgesehen ist und zwei vertikale Führungen (7) trägt, die parallel zueinander sind, und dass der Motorraum (5) eine Vorderwand (8) aufweist, die mittels mindestens einer ersten Halterung (11) die zweite Platte (12) trägt, die auf einer vertikalen Ebene vorgesehen ist, die orthogonal zu der horizontalen Ebene ist, auf der die erste Platte (6) vorgesehen ist, wobei die vertikalen Seitenkanten der zweiten Platte (12) entlang der Führungen (7) gleiten können.

5. Maschine nach Anspruch 4, **dadurch gekennzeichnet, dass** zwischen den Platten (6 und 12) der fluiddynamische Aktuator (13) installiert ist, dessen Längsachse vertikal, parallel zur zweiten Platte (12) und orthogonal zur ersten Platte (6) verläuft; wobei der Aktuator (13) den stationären Zylinder (14), der von der ersten Platte (6) getragen wird, und die Stange (15) aufweist, deren freies oberes Ende an mindestens einer zweiten Halterung (16) befestigt ist, die an der zweiten Platte (12) befestigt ist.

6. Maschine nach einem der vorhergehenden Ansprüche, **dadurch gekennzeichnet, dass** die Mittel (2, 13) zur Steuerung der vertikalen Bewegung des Motorraums (5) eine Steuervorrichtung (2) umfassen, die von einer Bedienungsperson bedient werden kann.

## Revendications

1. Machine de terrassement, de préférence radiocommandée, comprenant :
un châssis (3), qui est pourvu de deux chenilles latérales (4) ;
un compartiment moteur (5), qui est supporté par la partie arrière dudit châssis (3) ;
des moyens (2, 13) pour commander le déplacement vertical dudit compartiment moteur (5) de manière à modifier la distance entre ce dernier et la surface de route ;
**caractérisée en ce que** lesdits moyens (2, 13) pour commander le déplacement vertical dudit compartiment moteur (5) comprennent un dispositif de commande (2) et un capteur (17), qui est capable de détecter la distance entre la paroi de fond dudit compartiment moteur (5) et la surface de route de manière à envoyer un signal relatif audit dispositif de commande (2) afin de commander le déplacement vertical dudit compartiment moteur (5).

2. Machine selon la revendication 1, **caractérisée en ce que** lesdits moyens (2, 13) pour commander le déplacement vertical dudit compartiment moteur (5) comprennent un actionneur dynamique à fluide (13) possédant un vérin fixe (14), qui est porté par une première plaque (6) fixée audit châssis (3), et une broche (15) possédant une extrémité libre fixée à une deuxième plaque (12), qui est portée par ledit compartiment moteur (5).

3. Machine selon la revendication 1, **caractérisée en ce que** lesdits moyens (2, 13) pour commander le déplacement vertical dudit compartiment moteur (5) comprennent un actionneur dynamique à fluide (13) possédant une broche (15), qui présente une extrémité libre fixée à une première plaque (6) portée par ledit châssis (3), et un vérin fixe (14) fixé à une deuxième plaque (12), qui est portée par ledit compartiment moteur (5).

4. Machine selon la revendication 2, **caractérisée en ce que** ledit châssis (3), dans sa partie arrière, est pourvu de ladite première plaque (6) disposée sur une plaque horizontale et supportant deux guides verticaux (7), qui sont parallèles l'un à l'autre, et **en ce que** ledit compartiment moteur (5) possède une paroi avant (8), qui, à l'aide d'au moins un premier support (11), supporte ladite deuxième plaque (12) disposée sur un plan vertical qui est orthogonal au plan horizontal sur lequel est disposée ladite première plaque (6) ; les bords latéraux verticaux de ladite deuxième plaque (12) étant capables de coulisser le long desdits guides (7).

5. Machine selon la revendication 4, **caractérisée en ce qu'**entre lesdites plaques (6 et 12) est installé ledit actionneur dynamique à fluide (13) dont l'axe longitudinal est vertical, parallèle à ladite deuxième plaque (12) et orthogonal à ladite première plaque (6) ; ledit actionneur (13) possédant ledit vérin fixe (14), qui est porté par ladite première plaque (6), et ladite broche (15), qui présente une extrémité supérieure libre fixée à au moins un deuxième support (16) qui est fixé à ladite deuxième plaque (12).

6. Machine selon l'une quelconque des revendications précédentes, **caractérisée en ce que** les moyens (2, 13) pour commander le déplacement vertical dudit compartiment moteur (5) comprennent un dispositif de commande (2), qui peut être actionné par un opérateur.
